# EUROPEAN PATENT APPLICATION

(11) **EP 0 534 008 A1**
(43) Date of publication of application: **31.03.1993**
(21) Application number: 91202504.6
(22) Date of filing: 26.09.1991
(51) Int. Cl.: G03B 27/52, H04N 1/10, F16H 19/00

(54) **Drive system for a scanning unit**

(71) Applicant: AGFA-GEVAERT naamloze vennootschap, B-2640 Mortsel (BE)
(72) Inventor: Costrop, Dirk Leo, B-2640 Mortsel (BE)

(57) **Abstract**

A drive system for a scanning unit (14) which is reciprocatinly driven between two end positions in an optical scanning system, comprising stretched wire means (40) connected to the unit, at least one fixed pulley (46,47) for the wire means, a winding spindle (51) on which the pulling (41) and the easing (42) section of the wire means are wound, and a motor (39) for driving said winding spindle in either direction, wherein the spindle portion on which the wire means is wound has a helical, concavely curved groove (52) for receiving and guiding the wire means, and the wire means is wound around the spindle a number of turns which is such that the length of wound wire means equals at least the distance over which both the pulling and easing sections of the wire means are displaced during movement of the scanning unit between its two end positions.

## Description

### BACKGROUND OF THE INVENTION

### Field of the invention

The present invention relates to a drive system for a scanning unit that is reciprocatingly driven between two end positions in an optical scanning system.

### Description of the prior art

Optical scanning systems are known comprising a bodily stationary glass plate for supporting a document, and a scanning unit mounted for bodily movement parallel with and close to the underside of the plate.

The scanning unit is provided with optical sensing means onto which the image of the document is linewise focussed during the scanning displacement of the unit.

The degree of fidelity of the reproduction of the original document depends on the accuracy of movement of the scanning unit. This accuracy depends on the precision of the guidance of the scanning unit during its displacement but also on the precision of its drive. The latter precision is in particular important in scanners for generating electrical information signals for onward image processing. In the case of colour work, a colour original is scanned three times in succession in order to produce a magenta, a cyan and a yellow separation image by appropriate colour filtering. The image signals of these three separation images should coincide with each other in time within very close limits, since an occasional misalignment in the final print, whether on a local spot or over a larger area, is easily noticeabe by the naked eye. A very good image registering is particularly required in the production of prints or printing plates in the graphic industry where deviations in the relative positions of the separation images should be smaller than approximately 10 micrometer.

Known drive systems with chains, toothed belts or KEVLAR (tradename)-type flat belts do not offer the required reproduction precision for graphic work.

Other known drive systems with stretched wires, usually made of stainless steel strands neither offer a precision which satisfies graphic reproduction work.

If the stretched wire is wound around a wire drum of a relatively large diameter, a limited number only of wire turns is required to cover the scan length of the scanning unit. However, suchlike wire drum requires a reduction gear for its drive, and this is the cause for vibrations and an insufficient drive precision of the scanning unit.

If the stretched wire is wound on a winding spindle of a relatively small diameter, such spindle can be directly coupled with the drive motor. The disadvantage of suchlike drive system is the relatively large number of wire turns that is required in order to cover the scan length. A large number of turns causes a relatively important displacement of the wound wire in the axial direction of the winding spindle so that the winding angle, i.e. the angle between the direction of approach of the wire and the axis of the winding spindle, varies during winding (and unwinding). If this angle is slightly less than 90 degrees this causes a lateral compression of the wire turns wound on the spindle resulting in increased wear, vibration and possible leaping of the wire, whereas an angle slightly larger than 90 decrees causes an unreproducible separation of the distinct wire revolutions.

A mechanism with a wire drum, which is suitable only for routine document copying purposes and wherein moreover the classic 2:1 speed ratio is obtained, is disclosed in US-A-4,728,988 to Mita Industrial Cy.

### SUMMARY OF THE INVENTION

### Object of the invention

The object of the present invention is to provide a drive system for a scanning unit in an optical scanning system, which has a high drive precision and is suited in particular for colour work requiring several scans in succession of the same original document.

### Statement of the invention

According to the present invention, a drive system for a scanning unit which is reciprocatingly driven between two end positions in an optical scanning system, comprising stretched wire means connected to the unit, at least one fixed pulley for the wire means, a winding spindle on which the pulling and the easing section of the wire means are wound, and a motor for driving said winding spindle in either direction, is characterised thereby that the spindle portion on which the wire means is wound has helical groove means for receiving and guiding the wire means, and that the wire means is wound around the spindle over a number of turns which is such that the total length of wound wire means equals at least the distance over which both the pulling and easing sections of the wire means are displaced during movement of the carriage between its two end positions.

The improved drive precision of the system results from the co-operation of the wire means with the helical groove means of the drive spindle, together with the number of wound turns of the wire means.

The helical groove means ensure a reproducible winding position of the wire means according to the axial direction of the drive spindle so that drive inaccuracies as a consequence of unreproduceable axial positions of the wire turns are avoided.

The helical groove means of the drive spindle preferably conform to the cross-section of the wire means so that there is almost no deformation of the cross-section of the wire means which is wound under tension on the drive spindle and hence no risk for winding different lengths of wire means on the drive spindle for an equal number of windings, this as distinct from wires that are wound on a truly cylindrical surface which causes flattening of the stretched wire and thereby a shortened wound wire length.

It should be noted that the feature the number of wound revolutions of the wire means being such that the total length of wound wire means equals at least the distance over which both the pulling and easing sections of the wire means are displaced during movement of the scanning unit between its two end positions, is not dictated by the displacement as such of the scanning unit over the scan length. On the contrary, it is possible to wind a smaller number of turns of the wire means on the drive spindle and if no portion of the wire means is fixedly attached to the winding spindle, suchlike system is perfectly operative. However, we have found that the real reason for said feature is the accuracy of drive of the scanning unit, irrespective of whether the wire means is fixed at some place to the winding spindle or not.

It is possible that the wire means is wound around the winding spindle over a number of turns such that the total length of wound wire means is larger than the distance over which both the pulling and easing sections of the wire means are displaced during movement of the scanning unit between its end positions. This has as only consequence that some turns of the wire means become never unwound from the winding spindle .

Suitable features of a drive system according to the invention are as follows.

The wire means comprises one wire, one section of the wire performing a pulling and the other section an easing function, and conversely, depending on the direction of movement of the scanning unit. The use of one wire reduces the number of wire ends to only two, and according to a preferred embodiment of the invention such two ends can be fixed to the winding spindle by means of one fixation screw only.

Further, each of both wire sections can comprise two parallel sub-sections, the cross-over between each two sub-sections on the scanning unit occurring by conveyance of each wire section over a pulley mounted on the unit. The advantage of this feature is that the stretching forces in the wire are halved whereby the stiffness of the drive is doubled and the precision of drive control is correspondingly increased.

According to a further embodiment of the invention, the winding spindle is in the form of a drive shaft with one helical groove with one or more radial bores for passage of the wire end(s) and/or for one or more fixation screws. The drive shaft preferably is directly coupled with the drive motor and according to a suitable embodiment the drive shaft has an axial bore which provides a tight fit with the shaft of the drive motor.

The diameter of the winding spindle is limited, and according to a suitable embodiment of the invention said diameter is less than 25 mm.

The drive motor preferably is a step motor which readily lends itself to an accurate control of its rotational speed.

### BRIEF DESCRIPTION OF THE DRAWINGS

The invention will be described hereinafter by way of example with reference to the accompanying drawings, wherein :
Fig. 1 is a diagrammatical representation of one embodiment of an image scanner according to the invention,
Fig. 2 is an isometric view of the drive system for the scanning unit of the scanner according to Fig. 1,
Fig. 3 is an enlarged view of the winding spindle of the drive system according to Fig. 2,
Fig. 4 is a partly longitudinal sectional view of the winding spindle,
Fig. 5 is a transverse section on line 5-5 of Fig. 4,
Fig. 6 is a transverse section on line 6-6 of Fig. 4, and
Fig. 7 is an enlarged view of the winding groove of the winding spindle.

### Detailed description of the invention

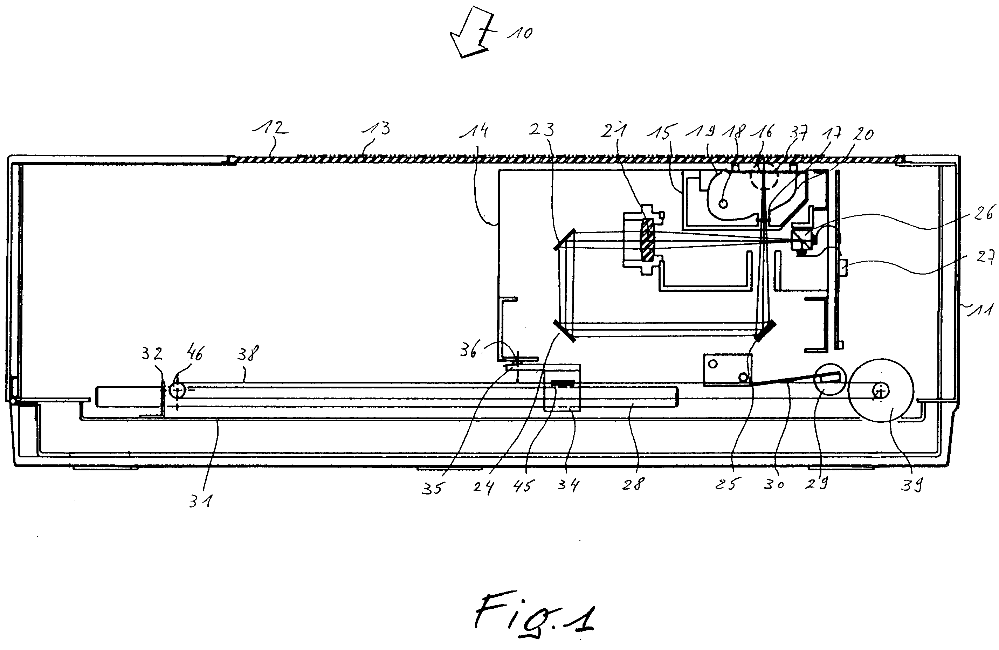

Referring to the image scanner 10 shown in Fig. 1 the apparatus is mounted within a lighttight cabinet 11 at the top of which there is a clear glass plate 12 on which a document 13 to be scanned can be laid.

Inside the apparatus there is a scanning unit 14 with a light box 15. The top of the light box has a light-transmitting opening 16 and the bottom of the box has an exposure slot 17. Both openings extend transversely of the box. The light box comprises a tubular exposure lamp 18 and curved reflectors 19 and 20 directing light upwardly through opening 16.

The scanning unit 14 further comprises a lens 21 and mirrors 23, 24 and 25. The lens is mounted such that a sharp image line of document 14 is focussed on a light sensor array 26, e.g. a CCD sensor, which transduces the optical line signal into an electrical line signal that is conducted to an output terminal 27. This terminal is connected to an output cable (not shown) for transmission of the signal to processing means, e.g. in the form of a visual display unit, a photographic printing apparatus for producing a visible or developable latent image on a printing plate or other element, a thermographic printer, a facsimile apparatus, etc.

The scanning unit is displaceable according to the longitudinal direction of the scanner through the intermediary of a central supporting rod 28 and two lateral supporting rollers, only one being visible as 29. Rod 28 is fixed to base plate 31 by a bracket 32, and guides via a precision sleeve 34 a support 35 along a truly rectilinear path. Support 35 is connected to the scanning unit 14 via an elastic coupling 36.

The lateral supporting rollers are connected to the scanning unit via elastic arms, such as the arm 30, whereby the scanning unit is urged upwardly thereby making rolling contact with the lower side of the glass plate via two laterally spaced bearing members, which can be conventional ball bearings, one being shown as 37.

The described arrangement ensures that translation of the scanning unit occurs in a plane running truly parallel with the glass plate since the glass plate forms in fact the reference support for the scanning unit. In this way, the sharpness of the image line reproduced on the sensors 26 is limited only by occasional imperfections in the geometry of the glass plate 12. Further details about the guide system of the scanning unit and of its adjustment can be found in our co-pending application entitled "Optical scanning apparatus" filed in EU on March 3, 1991 under No 91 200 531.1.

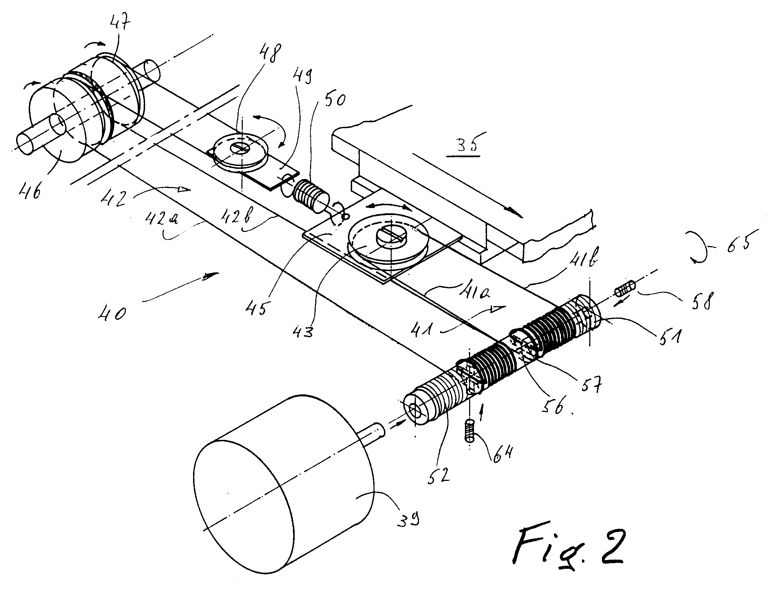

The drive of the scanning unit is represented in a simplified way by an endless belt 38 and a motor 39, but is shown in detail in Fig. 2, which will be described hereinafter.

Referring to Fig. 2, the drive system comprises one wire 40 composed of a number of stainless steel strands, coated as the case may be with a polymer layer for increasing its lifetime. Support 35 moving to the right in the drawing of Fig. 2, it is clear that 41 is the pulling section and 42 the easing section of the wire. Both sections comprise two parallel subsections, namely 41a, 41b, and 42a, 42b respectively.

The cross-over between pulling subsections 41a, 41b is located on a pulley 43 that is rotatably mounted to a shoulder 45 of support 35.

Pulley 43 is bodily stationary with respect to shoulder 45 so that winding both wire sections 41a, 41b causes a displacement of the pulley 43, and thus also of support 35 and the scanning unit 14, to the right-hand side of Fig. 2. Pulley 43 does not rotate in principle, unless a winding deficiency whatsoever would tend to produce a tension difference between sub-sections 41a and 41b. This, however, cannot occur as tiny angular rotations of pulley 43 immediately cancel out any possible difference in tension between both wire subsections.

The easing subsections 42a, 42b of the wire are bent by 180° over bodily stationary pulleys 46 and 47 mounted on base plate 31 of the apparatus.

The cross-over between subsections 42a and 42b is located on a pulley 48 rotatably fitted to a strip 49 being connected by means of a tension spring 50 to shoulder 45. In this way, the loop of wire 40 is closed. It will be understood that pulley 48 operates in the same way as pulley 43 to cancel out occasional tension differences in wire subsections 42a and 42b.

The tension of spring 50 determines the tension of the wire drive system of the apparatus. The tension of the pulling section of the wire is in operation increased by friction forces that oppose the displacement of the scanning unit.

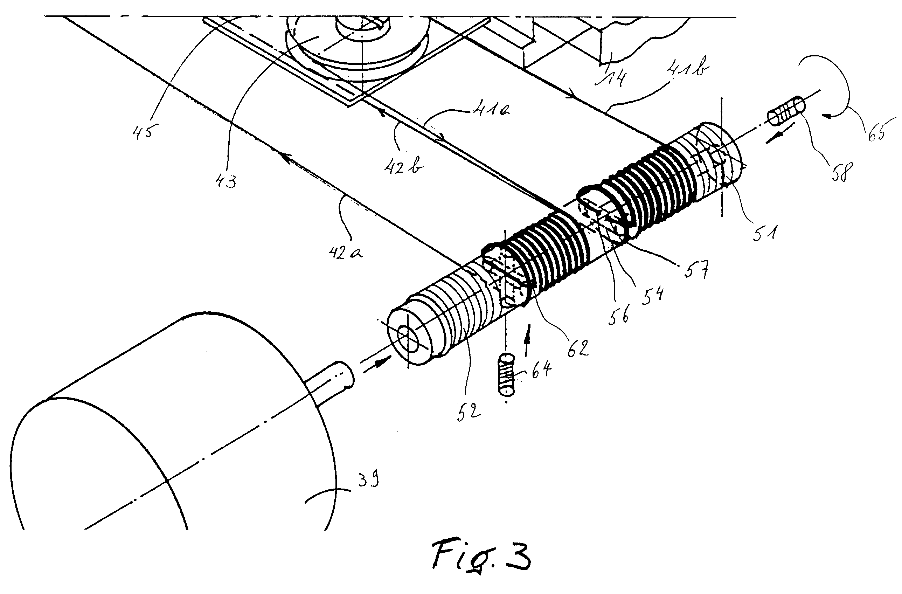

It will be understood that the notions "pulling section" and "easing section" of the wire become reversed as the scanning unit is returning to its starting position, i.e. to the left-hand side of Figs. 2 and 3.

Winding the wire on the winding spindle driven by motor 39 is illustrated in detail in the enlarged view of Fig. 3.

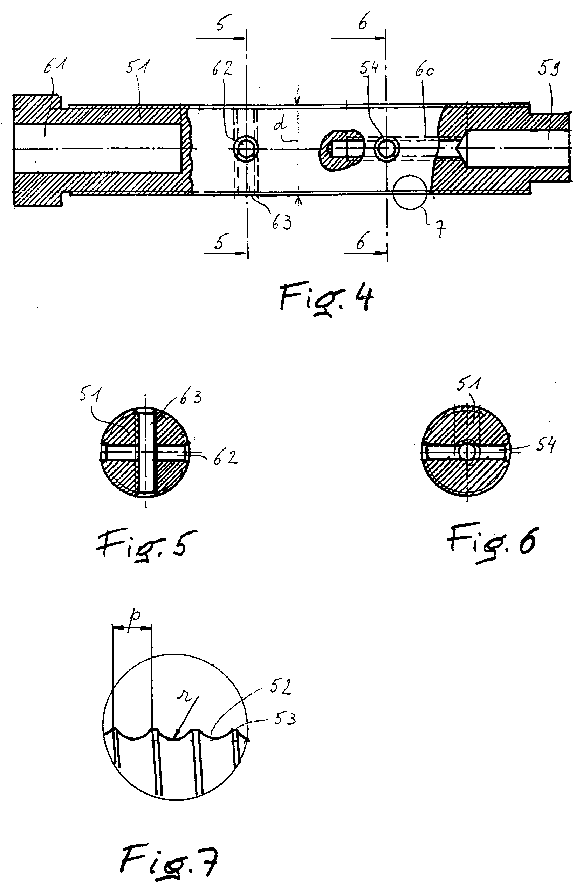

Winding spindle 51 (see also the sectional views of Figs. 4 to 7) is in fact a steel shaft, the periphery of which has been provided with a helical groove 52, the windings of which are separated from each other by a step 53. The pitch of the groove is indicated by p.

Both ends 56,57 of drive wire 42 are inserted in a radial bore 54 of the spindle. Actually these ends overlap each other over a distance almost equal to the diameter of the spindle but for reasons of clearness these ends have been shown as being separated from each other over a small distance in the drawings of Figs. 2 and 3. The fixation of both wire ends occurs by means of a grub screw 48, which is inserted through a widened axial bore 59 of the spindle and then engages threaded bore 60 intersecting bore 54.

The winding spindle has at the opposite end an axial bore 61 which precisely fits over the shaft of motor 39 and is fixed thereto in any known manner.

The winding spindle further has a second radial bore 62 and a third one 63 which is threaded and intersects the second one, and into which fits a grub screw 64 (see Fig. 3).

The winding geometry of the wire on the winding spindle is as follows with reference to Fig. 3, it being understood that the spindle is rotating clockwise as indicated by arrow 65, and this for approximately one quarter of a revolution after which the scanning unit 14 will have reached its end position as shown in Fig. 1.

Pulling wire section 41b continues to wind towards the right-hand side of the spindle. For the sake of clearness approximately 11 windings only have been shown in the drawing but in practice said number will be higher, in dependence on the course of the carriage and the diameter of the winding spindle.

Pulling wire section 41a continues to wind towards the right-hand side of the spindle.

Unwinding section 42a continues to unwind from the spindle, approximately half a winding remaining on the spindle, up to the bore 62 where the wire is passed radially through the spindle. The purpose of bore 62 with cooperating clamping screw 64 is to fix the beginning of the pulling windings of section 41a to the spindle in the same way as the beginning of the pulling windings of section 41b are fixed to the spindle, namely by means of screw 58. In this way both pulling subsections as well as both easing subsections have the same configuration on the winding spindle, and in consequence both subsections of each wire section proceed in exactly the same way so that neither pulley 43 nor pulley 48 undergo any rotation.

The winding goes on for approximately one quarter of a revolution of the winding spindle as mentioned already and then the scanning unit has reached its end position and the scanning of the original has come to an end.

The drive of motor 39 is reversed so that the scanning unit is returned to its start position. This returning can occur at the same speed as the scanning speed but can proceed occasionally at increased speed. During the returning movement, the operations of winding and unwinding are reversed as compared with those described hereinbefore.
One feature deserves some further attention. As subsection 42b is being wound on the winding spindle and thus becomes displaced towards the left-hand side of the spindle, subsection 41a becomes correspondingly unwound so that there is sufficiently winding space for 42b at any time.

As the scanning unit has returned to its initial position, the second scan of the original document is performed.

Suitable optical filter means, not shown in the drawings, select the spectral region of the original that has to be scanned.

The scanning operation is repeated a third time so that three distinct video signals are available, each representing a specific colour separation of the original.

The following data illustrate the apparatus described hereinbefore.
- Wire 40 :: diameter 800 micrometer
composition : stainless steel, nylon coated, oil injected.
- Course of scanning unit 14 :: 470 mm
- Winding spindle 51 :: diameter d : 10.61 mm
length : 70.5 mm
pitch p : 1.0 mm
groove radius r : 0.5 mm
- Total wire lenght:: 3970 mm
- Motor 39 :: stepper motor 0.9^{o}, with microstepping driver
- Image resolution :: 1,200 dpi
- Accuracy:: better than 5 micrometer.

The appparatus described hereinbefore was modified by replacement of the winding spindle by another one which had a smooth peripheral winding surface. No other modifications were carried out. It was found that in these circumstances the repetitive accuracy was not better than 50 micrometer.

The invention is not limited to the embodiment of the scanner described hereinbefore.

The scanner can be used also for scanning monocolour originals.

The drive system can also operate with a single pulling and easing wire section instead of the two subsections as described hereinbefore.

If each wire section comprises two subsections as described in the example, the drive system can comprise two wires instead of one. Thus grub screw 58 and 64 could serve for fixing both ends of a first and a second wire respectively that would produce the right-hand side series of wire turns on the winding spindle.

Fixing of the wire on the winding spindle must not necessarily occur as described in the example hereinbefore. Thus, the function of grub screw 64 could be performed by a second grub screw, that could be axially inserted in the spindle in the same way as screw 58. More specifically, and referring to Fig. 4, spindle 51 could comprise an extension of axial bore 60 up to the radial bore 62. Such extension could be threaded, e.g. for an M.3 grub screw, whereas bore 60 could be threaded for an M.4 grub screw.

Supporting and guiding of the scanning unit can occur by other means than the illustrated central guide rod and lateral guide wheels.

## Claims

1. A drive system for a scanning unit (14) which is reciprocatingly driven between two end positions in an optical scanning system, comprising stretched wire means (40) connected to the unit, at least one fixed pulley (46,47) for the wire means, a winding spindle (51) on which the pulling (41) and the easing (42) section of the wire means are wound, and a motor (39) for driving said winding spindle in either direction, characterised in that the spindle portion on which the wire means is wound has helical groove means (52) for receiving and guiding the wire means, and that the wire means is wound around the spindle a number of turns which is such that the length of wound wire means equals at least the distance over which both the pulling and easing sections of the wire means are displaced during movement of the scanning unit between its two end positions.

2. A drive system according to claim 1, wherein the wire means comprises one wire (40), one section (41) of the wire performing a pulling and the other an easing (42) function, and conversely, depending on the direction of rotation of the winding spindle (51).

3. A drive system according to claim 2, wherein each of both wire sections (41,42) comprises two parallel subsections (41a-42b, 42a-42b), the cross-over between each two subsections on the scanning unit occurring by conveyance of each wire section over a pulley (43,48) moving with the unit.

4. A drive system according to claim 3, wherein one (43) of said two pulleys is bodily stationary connected to the scanning unit, whereas the other (48) one is displaceably mounted and biased by spring means (50) to stretch the wire subsections.

5. A drive system according to claim 3, which comprises means for fixing the wound portion of each wire section at one point to the winding spindle.

6. A drive system according to claim 2, which comprises one wire (40), the two wire ends (56,57) being fixed at the same point to the winding spindle.

7. A drive system according to any of claims 1 to 6, wherein the winding spindle (51) is in the form of a drive shaft with one helical groove (52).

8. A drive system according to claim 7, wherein the diameter of the winding spindle is smaller than 25 mm.

9. A drive system according to claim 5, wherein said means comprises a radial bore (54) and a co-operating axial locking screw (58).

10. A drive system according to claim 5, wherein said means comprises a radial bore (62) and a co-operating radial locking screw (64).
